**Europäisches Patentamt**

**European Patent Office**

**Office européen des brevets**

(19)

(11) Numéro de publication: **0 021 996 B1**

# (12) FASCICULE DE BREVET EUROPEEN

(45) Date de publication du fascicule de brevet:
**14.04.82**

(21) Numéro de dépôt: **80400901.7**

(22) Date de dépôt: **18.06.80**

(51) Int. Cl.³: **B 05 B 7/06** // B05B17/06, G01N21/72

(54) **Dispositif pour la production d'un jet d'aérosol.**

(30) Priorité: **18.06.79 FR 7915575**

(43) Date de publication de la demande:
**07.01.81 Bulletin 81/1**

(45) Mention de la délivrance du brevet:
**14.04.82 Bulletin 82/15**

(84) Etats contractants désignés:
**AT BE CH DE GB IT LI LU NL SE**

(56) Documents cités:
**FR-A- 2 067 645**
**US-A- 3 325 976**
**US-A- 4 134 547**

(73) Titulaire: **INSTRUMENTS S.A., 8 rue de la Rochefoucauld, F-75009 Paris (FR)**

(72) Inventeur: **Trassy, Christian, 12 avenue Roberto Rossellini, F-69100 Villeurbanne (FR)**

(74) Mandataire: **Dupuy, Louis et al, CREUSOT-LOIRE 15 rue Pasquier, F-75383 Paris Cedex 8 (FR)**

ACTORUM AG.

Dispositif pour la production d'un jet d'aérosol

La présente invention concerne un dispositif pour la production d'un jet d'aérosol, plus particulièrement destiné à titre d'exemple à un appareil d'analyse par spectroscopie. Dans un appareil d'analyse d'une solution par spectroscopie, la solution à étudier est d'abord finement divisée sous forme d'un aérosol, puis injectée dans une flamme de plasma telle que de l'argon ionisé, à une température de l'ordre de 5000°. Dans le plasma l'aérosol est excité, et émet à son tour un rayonnement caractéristique des éléments contenus dans la solution. Ce rayonnement est analysé dans un spectromètre usuel.

On connaît divers moyens pour nébuliser la solution, et en particulier l'utilisation d'ultra-sons qui provoquent la rupture de la masse liquide en très fines gouttelettes notamment dans le brevet FR-A-2 067 645; les gouttelettes peuvent alors être entraînées dans un courant gazeux vers leur utilisation, et en particulier vers la torche à plasma. Dans les appareils usuels actuels, certaines gouttelettes transportées peuvent venir au contact des parois de la canalisation; au voisinage de la torche à plasma les parois sont chaudes, ce qui entraîne dans cette zone une évaporation de ces gouttelettes, avec dépôt des sels contenus. Il en résulte des risques de restriction de section de passage, et même de bouchage de la conduite. Mais ceci a pour conséquence encore plus grave de laisser dans l'appareil une «mémoire» qui risque de fausser l'analyse suivante, par exemple par disolution dans un nouveau brouillard d'une partie des dépôts formés au cours d'analyses antérieures. Pour éviter ces perturbations il faudrait à chaque analyse rincer ou changer les conduites d'arrivée de l'aérosol dans la flamme, ce qui est incompatible avec le besoin de plus en plus affirmé de permetre des analyses séquentielles à cadences élevées.

La présente invention apporte une solution pour éviter ces inconvénients, et permet d'améliorer le rendement énergétique de l'appareil.

Elle concerne un dispositif pour la production d'un jet d'aérosol, comportant un organe pulvérisateur du produit à transporter, avec création d'un débit de gaz porteur pour entraîner les particules formées. Selon l'invention, en aval du pulvérisateur proprement dit, la conduite d'acheminement de l'aérosol formé par le gaz porteur et les particules en suspension, constitue le canal central d'une tuyère double dont le canal annulaire reçoit un autre flux gazeux sec pour former, dans la conduite de reprise de l'ensemble vers l'utilisation, un flux central d'aérosol gainé extérieurement par un flux de gaz sec selon un principe connu du brevet USA-4 134 547, les débits et la disposition relative des canaux annulaire et central de la tuyère étant déterminés de telle sorte que les écoulements des deux flux restent laminaires et à vitesses voisines.

Selon une forme préférentielle de réalisation, l'axe de la tuyère et de la conduite entre la sortie de la tuyère et l'utilisation, est vertical ou seulement très légèrement incliné.

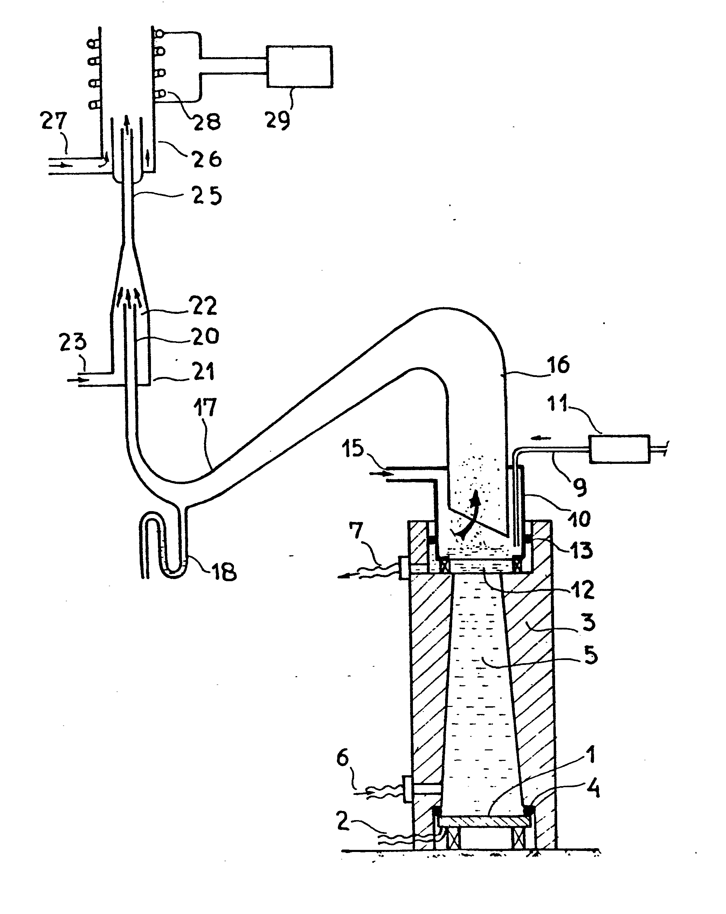

L'invention sera mieux comprise en se référant à un mode de réalisation particulier donné à titre d'exemple et représenté par le dessin annexé.

La figure unique est une représentation schématique d'un appareil destiné à nébuliser une solution par ultra-sons, et à injecter le brouillard formé dans une flamme de plasma en vue d'une analyse par spectro-émission.

L'appareil comporte un générateur d'ultra-sons constitué par un cristal piézo-électrique 1, excité électriquement à partir d'un générateur non représenté ici, et auquel il est relié par les connexions 2. Les ondes ultrasonores, d'une plage de fréquence de 200 KHz à 10 MHz sont transmises par une colonne liquide 5 qui maintient une charge constante sur le cristal. La colonne liquide est maintenue dans un corps 3 posé sur le cristal avec interposition de joints d'étanchéité 4, une circulation continue d'eau étant entretenue entre une entrée 6 et une sortie 7 pour assurer également le refroidissement.

La solution à nébuliser est introduite par la tuyauterie 9 dans la cellule 10 au moyen d'une pompe péristaltique 11 commandée par un moteur pas à pas, pour maintenir dans la cellule une quantité de liquide constante en cours de fonctionnement. La cellule 10 fermée à sa partie inférieure par une membrane mince 12, par exemple en polyester de 10 à 100 microns d'épaisseur, est adaptée sur le corps 3 avec interposition de joints d'étanchéité 13.

La cavité du corps 3 forme un adapteur d'impédance destiné à augmenter l'amplitude de l'onde acoustique et la production d'aérosol, tout en permettant de diminuer la puissance à fournir au cristal. L'amplification est obtenue par réduction de section de l'entrée vers la sortie; la densité de puissance acoustique nécessaire à l'apparition de cavitation dans la solution étant constante, la puissance à fournir au cristal sera inversement proportionnelle à la section.

L'adaptateur est constitué par un corps solide (métal, verre...) présentant une impédance acoustique telle que le coefficient de réflexion de l'onde à l'interface entre le corps et la colonne de liquide de charge soit total. La forme de l'adaptateur doit être régulière, et compte tenu du fait que les dimensions sont ici nettement supérieures à la longueur d'onde, on a choisi une forme conique comme plus simple à réaliser.

L'état de surface interne de l'adaptateur doit être meilleur que le cinquantième de la longueur d'onde pour obtenir un rendement satisfaisant. Pour éviter une dégradation de l'état de surface entraînant une dégradation du rendement, on choisit comme liquide de transmission un liquide inerte chimiquement vis-à-vis de la matière constituant le guide. En particulier en cas d'utilisation d'eau, celle-ci devra être déminéralisée et dégazée, tout dépôt sur les parois internes du guide risquant de perturber son bon fonctionnement. Sa température devra être stable et par exemple inférieure à 17° s'il s'agit d'eau.

Pour toute question de diffraction des ondes sonores pouvant intervenir dans le calcul de l'adaptateur d'impédance, on pourra par exemple se référer à un ouvrage tel que «Fundamental of Ultrasonics», J. Blitz, Butterworths, London.

Les gouttelettes formées par les phénomènes de cavitation engendrés par les ultra-sons au voisinage de la surface de la solution dans la cellule 10, sont entraînées par un courant d'argon introduit en 15. L'aérosol ainsi formé est entraîné dans la cheminée d'extraction 16 dont la base est en forme de biseau pour assurer un retour non perturbateur des gouttes de gros diamètre projetées par le geyser d'ultra-sons. Les gouttes de trop fort diamètre, ou redéposées sur les parois de la conduite, sont encore récupérées dans le drain coudé 17 muni d'un siphon d'évacuation 18.

L'aérosol est alors amené, par le tube central 20, dans la tuyère double 21 dont le conduit annulaire périphérique 22 est alimenté par un flux gazeux sec arrivant par la canalisation 23. Les débits et les vitesses, d'une part du flux central d'aérosol humide porteur de gouttelettes de solution, et d'autre part du flux annulaire de gaz sec, sont déterminés de façon à maintenir des écoulements laminaires de vitesses voisines, pour éviter la formation de tourbillons à leur interface. On obtient ainsi dans la tubulure de sortie 25, une veine centrale de gaz transportant les particules humides de la solution, et une véritable gaine continue extérieure de gaz sec qui évite le contact des particules transportées avec les parois.

C'est cette conduite 25 qui sert d'injecteur de l'aérosol dans la torche à plasma 26, constituée de façon usuelle par une arrivée d'un flux de gaz plasmagène comme de l'argon amené par la conduite 27 entre les spires d'un inducteur 28 alimenté à très haute fréquence par un générateur 29.

On voit que dans la conduite 25, chauffée par la proximité de la torche 26, les gouttelettes de la solution à étudier, en suspension dans l'aérosol, ne peuvent pas venir s'évaporer au contact des parois chaudes et y déposer les sels contenus. La conduite 25 reste donc toujours propre, à section constante, et en fin d'analyse sans trace de la solution qui vient d'être étudiée. Le passage à une autre analyse peut alors se faire sans risque instantanément, et sans nécessiter de démontage ou de rinçage.

On prendra soin, pour conserver la qualité du gainage gazeux, d'éviter dans le flux formé à la sortie de la tuyère les composantes transversales dues à la gravitation. Pour cela le système tuyère et conduite de sortie jusqu'à l'utilisation sera disposé verticalement, au moins lorsque l'aérosol contient des particules de relativement grosses dimensions (1 micron pour l'eau) ou de fortes masses volumiques. Pour des particules légères ou de faibles dimensions (inférieures à 0,1 micron par exemple pour l'eau) on pourrait tolérer de faibles portions de trajet oblique ou même horizontal, si la vitesse de l'écoulement permet de limiter suffisamment le temps de passage des particules dans ces sections où la gravitation pourrait provoquer une traversée de la gaine gazeuse de protection.

Bien entendu l'invention n'est pas limitée au seul mode de réalisation ou à la seule application qui viennent d'être décrits à titre d'exemple, mais elle couvre aussi les réalisations qui n'en différeraient que par des détails, par des variantes d'exécution, ou par l'utilisation de moyens équivalents.

C'est ainsi qu'elle peut s'appliquer à la production de jets d'aérosol chaque fois que le risque de dépôt de particules transportées sur des parois chaudes risque d'être dommageable pour la bonne conservation ou le bon fonctionnement de l'installation. Ces particules peuvent alors être solides ou liquides, par exemple pour l'alimentation de bruleurs ou de chaudières, et la pulvérisation du produit à transporter par l'aérosol pourrait être obtenue par des moyens connus autres que les ultra-sons.

**Revendication**

1. Dispositif pour la production d'un jet d'aérosol comportant un organe pulvérisateur du produit à transporter, avec création d'un débit de gaz porteur pour entraîner les particules formées vers un appareil d'utilisation, caractérisé par le fait que en aval du pulvérisateur proprement dit la conduite d'acheminement de l'aérosol formé par le gaz porteur (15) et les particules en suspension constitue le canal central (20) d'une tuyère double (21) dont le canal annulaire (22) reçoit un autre flux gazeux sec (23) pour former, dans la conduite (25) de reprise de l'ensemble vers l'utilisation, un flux central d'aérosol gainé extérieurement par un flux de gaz sec, les débits et la disposition relative des canaux annulaire et central de la tuyère étant déterminés de telle sorte que les écoulements des deux flux restent laminaires et à vitesses voisines, et par le fait que l'axe de la tuyère (20) et de la conduite (25) entre la sortie de la tuyère et l'utilisation est vertical ou seulement très légèrement incliné.

**Patentanspruch**

1. Vorrichtung zum Erzeugen eines Aerosolstrahles, mit einem Zerstäubungsorgan für das zu fördernde Produkt, mit Schaffung einer Menge von Trägergas zum Mitführen der entstandenen Teilchen zu einer Anwendungsvorrichtung, dadurch gekennzeichnet, dass in Strömungsrichtung nach der eigentlichen Sprühdüse die Förderleitung für den vom Trägergas (15) gebildeten Aerosolstrahl und die suspendierten Teilchen den zentralen Kanal (20) eines doppelten Rohres (21) bildet, dessen ringförmiger Kanal (22) einen anderen Strom (23) von Trockengas aufnimmt, um in der Austragleitung (25) des Gemisches zur Anwendung hin einen zentralen Aerosolstrom zu bilden, der aussen von einem Strom von Trokkengas umhüllt ist, wobei die Mengen und die relative Anordnung des ringförmigen und des zentralen Kanals des Rohres derart festgesetzt sind, dass die beiden Ströme laminar und mit annähernd gleicher Geschwindigkeit fliessen, und dass die Achse des Rohres (20) und der Leitung (25) zwischen der Mündung des Rohres und der Anwendung vertikal oder nur ganz leicht geneigt ist.

## Claim

Device for producing an aerosol jet consisting of an atomizing body for the product to be transported, using creation of a propellant gas flow which carries the particles formed along with it towards an apparatus making use of said aerosol, characterised by the fact that downstream of the actual atomizer, the conduit for conveying the aerosol made up by the propellant gas (15) and the particles in suspension constitutes the central channel (20) of a double walled pipe (21) the annular channel (22) of which is supplied with a further dry gas flow (23) in order to form, in the conduit (25) for bringing these together and passing them to the point of usage, a central flow of aerosol which is sheathed externally by a flow of dry gas, the amount of flow in and the relative arrangement of the annular and central channels of the pipe being determined in such a way that the flow conditions of the two flows remain laminar and at velocities which are close to each other, and by the fact that the axis of the central (20) and of the conduit (25) between the outlet from the central channel and the point of usage, is vertical or only very slightly inclined.